# FASCICULE DE BREVET EUROPEEN

(11) **EP 3 708 618 B1**
(45) Date de publication et mention de la délivrance du brevet: **26.05.2021**
(21) Numéro de dépôt: 19162144.0
(22) Date de dépôt: 12.03.2019
(51) Int. Cl.: C09D 7/61, C09D 5/02

(54) **COMPOSITION AQUEUSE DE PEINTURE CONTENANT DES PARTICULES POLYMÉRIQUES CREUSES ET DE DENSITÉ INFÉRIEURE À 1 OU 0,9**
WÄSSRIGE FARBZUSAMMENSETZUNG MIT EINER DICHTE UNTER 1 ODER 0,9, DIE POLYMER-HOHLPARTIKEL ENTHÄLT
AQUEOUS PAINT COMPOSITION CONTAINING HOLLOW POLYMERIC PARTICLES AND WITH DENSITY LOWER THAN 1 OR 0.9

(43) Date de publication de la demande: 16.09.2020
(73) Titulaire: Theolaur Peintures, 59139 Noyelles-les-Seclin (FR)
(72) Inventeur: JOYEUX, Catherine, 59139 NOYELLES-LES-SECLIN (FR)
(74) Mandataire: Ipside

(56) Documents cités:
- WO-A1-2011/134908

## Description

### Domaine technique

La présente invention concerne une composition de peinture contenant comme solvant majoritaire de l'eau et présentant une densité inférieure à 1 ou 0,9.

### Art antérieur

La peinture est un liquide plus ou moins fluide, opaque et teinté, destinée à être appliquée sous forme de film mince et à durcir d'elle-même en formant un feuil pelliculaire (la peinture est parfois définie comme un vernis teinté et opacifié).

A la différence d'un enduit, la peinture s'applique sur les murs et plafonds à l'aide d'une brosse, d'un rouleau ou par pulvérisation. Les enduits sont plus épais et sont appliqués à l'aide d'une truelle ou spatule.

De manière classique, une peinture est composée d'un solvant, de particules non solubles dans ce solvant que l'on nomme charges et/ou pigments et d'un ou plusieurs liants qui permettent en polymérisant de relier les particules et de former le film, une fois la peinture sèche. WO2011/134908 divulgue une composition aqueuse de peinture ayant une densité de 1,49 et comprenant des particules de TiO2 et des particules polymériques creuses.

Les pigments sont coûteux et lorsqu'il s'agit d'oxydes métalliques, ils sont lourds et augmentent la densité de la peinture. Cette dernière étant plus dense, devient plus difficile à appliquer du fait de son poids. Son transport est également plus coûteux.

Un but de la présente invention est de proposer une formulation de peinture aqueuse qui présente une densité inférieure à 1 ou 0,9.

Un autre but de la présente invention est de proposer une formulation de peinture telle que précitée qui permet d'obtenir, une fois la peinture appliquée et séchée, un revêtement de finition mat ou veloutée.

Un autre but de la présente invention est de proposer une formulation de peinture de densité inférieure à 1 ou 0,9 qui permet d'obtenir un tendu satisfaisant pour une utilisation en peinture décorative à l'intérieur sur un mur ou un plafond.

Un autre but de la présente invention est de proposer une formulation de peinture qui permet d'obtenir un revêtement présentant une dureté suffisante pour qu'il soit résistant aux frottements humides, notamment selon la norme ISO 11998 : 2006.

Un autre but de la présente invention est de proposer une formulation de peinture de densité inférieure à 1 ou 0,9 qui peut être calibrée pour sa coloration avec du matériel conventionnel mesurant la valeur du L* (CIELAB).

### Résumé de l'invention

Pour obtenir un des buts précités, la présente invention propose une composition de peinture contenant, en tant que solvant majoritaire, de l'eau et au moins un pigment. De manière caractéristique, selon l'invention, elle contient, en outre, des particules polymériques creuses, en particulier des particules polymériques creuses choisies parmi les particules de latex creuses, les microsphères polymériques creuses et les mélanges de ces deux types de particules et elle présente une densité inférieure à 1 et en particulier inférieure ou égale à 0,90 et plus particulièrement égale à 0,85 ±0,03.

L'utilisation des particules creuses en remplacement d'une fraction du pigment permet d'alléger la composition.

Avantageusement, la composition comporte un mélange des deux types de particules.

Les particules de latex creuses donc plus légères que le pigment, remplacent partiellement le pigment et confère une opacité suffisante à la composition pour obtenir un bon couvrant du revêtement final obtenu par application et séchage de la peinture. Les particules creuses de latex ont, par exemple, une densité sensiblement égale à 0,95 ou inférieure à 1,5 et notamment égale à 1,03. A titre comparatif, la masse volumique du dioxyde de titane est de l'ordre de 3900-4300 kg/m³.

Les microsphères polymériques précitées remplacent également une fraction du pigment et sont plus légères encore que les particules de latex. Elles ont de préférence une densité inférieure à 1. Par exemple, elles peuvent présenter une masse volumique inférieure à 50kg/m³, notamment inférieure à 40kg/m³ et avantageusement de l'ordre de 36kg/m³ +- 4. Elles abaissent en revanche le brillant du revêtement final obtenu après séchage de la peinture. Elles sont utilisées comme agent matant ou matifiant. Les microsphères ont l'avantage de faciliter l'application de la peinture puisqu'elles roulent sur la surface sous l'effet de la brosse ou du rouleau. Les particules de latex creuses sont également avantageusement sphériques, selon une variante préférée.

Ainsi, pour une finition velours ou brillant velours, la composition comprend plus de microsphères et de pigment(s) que pour une finition primaire ou mate.

Selon un mode de réalisation particulier qui peut être combiné à l'un quelconque des modes de réalisation précité, la composition de l'invention contient un % massique desdites particules polymériques sensiblement égal ou supérieur à 15% et sensiblement égal ou inférieur à 23% et en particulier sensiblement égal ou supérieur à 17,5% (primaire) ou sensiblement égal ou supérieur à 18,3 (finition mat) ou sensiblement égal ou supérieur à 21,3% (finition velours).

Selon un mode de réalisation particulier qui peut être combiné à l'un quelconque des modes de réalisation précités, la composition selon l'invention contient un % massique desdites microsphères polymériques sensiblement égal ou supérieur à 6% et sensiblement égal ou inférieur à 11% et en particulier sensiblement égal ou supérieur à 7,5% (brillant primaire), plus particulièrement sensiblement égal ou supérieur à 8,3% (brillant mat) et plus particulièrement encore sensiblement égal ou supérieur à 9,3% (brillant velours) et/ou un % massique desdites particules de latex creuses sensiblement égal ou supérieur à 10 % (finition primaire ou mat) et sensiblement égal ou inférieur à 14% et en particulier sensiblement égal ou supérieur à 12% (brillant velours).

Les valeurs précitées permettent d'obtenir la densité souhaitée sans perdre en opacité du fait de la diminution de la teneur en pigment. De plus, ces valeurs permettent d'obtenir une peinture blanche, quand l'unique pigment est le dioxyde de titane. Cette peinture sert de base et peut être ensuite colorée avec des pâtes pigmentaires ou pigments. Elle peut être utilisée avec le matériel classique de calibration et de mesure des teintes utilisant mesure de la valeur du L* (CIELAB), en dépit de la présence des microsphères polymériques précitées dont le comportement de diffraction/réfraction de la lumière est différent de celui des charges habituellement utilisées.

Selon l'invention, le pigment n'est pas limité. La composition de l'invention peut comporter un ou plusieurs pigments choisi(s) parmi les oxydes et sulfures métalliques, les pérylènes, les quinacridones, les phtalocyanines et les pigments azoïques, par exemple.

Le pigment est avantageusement choisi parmi les sulfures et les oxydes métalliques de fer, chrome, cobalt et titane. Selon un mode de réalisation, combinable à tous les modes de réalisation précités, la peinture comporte du dioxyde de titane en tant que pigment et de préférence ne contient que du dioxyde de titane en tant que pigment à l'exclusion des autres pigments.

Selon un mode de réalisation particulier des microsphères polymériques, elles comportent une coque comprenant ou constituée d'un copolymère d'acrylonitrile de chlorure de vinylidène et d'acrylate de méthyle, ladite coque renfermant éventuellement un gaz. Le gaz peut être de l'isobutane, par exemple. De telles microsphères sont vendues sous l'appellation commerciale EXPANCEL®. Ainsi, il est possible selon l'invention, par exemple, de choisir des microsphères commercialisées sous les noms commerciaux suivants et éventuellement de les mélanger : EXPANCEL 461 WE/DE 20 d36 ; 461 WE/DE 40 d36, 920 WE/DE 40 d24, 921 WE/DE 40 d24, 461DE 20 d70, 461 DET 40d25 920 DET 4025 920 DET 80d25. WE signifie que le produit se présente sous la forme d'une suspension aqueuse contenant 15% en masse de microsphères et DE ou DET signifie que les microsphères sont sous la forme de poudre sèche. Les deux formes sont commercialisées.

Selon un mode de réalisation particulier, combinable avec l'un quelconque des modes de réalisation précités, le rapport massique particules polymériques/pigment(s) est sensiblement égal ou supérieur à 1 et sensiblement égal ou inférieur à 1,9 et en particulier sensiblement égal ou supérieur à 1,08 ou sensiblement égal ou supérieur à 1,59 ou plus particulièrement sensiblement égal ou supérieur à 1,65 et lorsque ladite composition comporte des microsphères polymériques, le % massique microsphères polymériques/pigment(s) est sensiblement égal ou supérieur à 0,300 et sensiblement égal ou inférieur à 0,750 et en particulier sensiblement égal ou supérieur à 0,465 ou sensiblement égal ou supérieur à 0,488 ou sensiblement égal ou supérieur à 0,682.

La Demanderesse a mis en évidence que ces rapports massiques permettaient de conserver une bonne opacité due au(x) pigment(s) éventuellement combiné(s) avec les particules creuses de latex (de préférence également sphériques) tout en diminuant la densité de la peinture sans toutefois altérer son brillant. On peut ainsi obtenir des compositions permettant d'obtenir un revêtement de finition mate ou velours bien différenciées en dépit de l'ajout des particules et notamment des microsphères polymériques qui ont tendance à diminuer la valeur du brillant de la peinture une fois sèche et à faire chuter l'opacité. Ces % massiques sont particulièrement intéressants quand l'unique pigment de la composition est le dioxyde de titane.

Avantageusement, le rapport massique particules polymériques/eau est sensiblement égal ou supérieur à 0,50 et sensiblement égal ou inférieur à 1,3 et en particulier sensiblement égal ou supérieur à 0,79 ou sensiblement égal ou supérieur à 0.88 et plus particulièrement sensiblement égal ou supérieur à 0,79. et lorsque ladite composition comporte des microsphères polymériques, le % massique microsphères polymérique/eau est sensiblement égal ou supérieur à 0,30 et sensiblement inférieur à 0,6 et en particulier sensiblement égal ou supérieur à 0,339 plus particulièrement sensiblement égal ou supérieur à 0,401 et encore plus particulièrement sensiblement égal ou supérieur à 0,517. On obtient ainsi une peinture qui s'applique facilement et qui peut être appliquée à la brosse, au rouleau ou même par pulvérisation à l'aide d'une buse de pulvérisation.

Selon un mode de réalisation particulièrement avantageux qui peut être combiné à l'un quelconque des modes de réalisation précités, la composition de l'invention comporte au moins un liant de type alkyde et plus particulièrement un liant du type alkyde uréthane en émulsion dans de l'eau.

Le pourcentage % massique dudit liant de type alkyde et particulièrement du liant de type alkyde uréthane précité est sensiblement supérieur ou égal à 2,5 et sensiblement égal ou inférieur à 4 et en particulier sensiblement égal à 3.

Ce liant de type alkyde peut être une émulsion aqueuse contenant un ou plusieurs alkydes. Un liant alkyde uréthane est une émulsion d'un alkyde ou de plusieurs alkydes, lequel/lesquels contiennent une liaison uréthane. L'alkyde ou les alkydes comportant éventuellement une liaison uréthane a/ont de préférence une teneur en huile ou longueur en huile moyenne (45 à 56%). Ils peuvent être obtenus à partir de l'huile de soja.

Le liant de type alkyde ou en particulier alkyde uréthane en émulsion dans de l'eau peut être combiné avec un autre liant par exemple, avec une dispersion de styrène acrylate dans de l'eau. La dispersion de styrène acrylate dans de l'eau est majoritaire et représente en masse de 20% à 30% et notamment 25% ou 26% de la composition selon l'invention.

La Demanderesse a mis en évidence que l'ajout du liant alkyde et notamment d'un liant alkyde uréthane en émulsion dans de l'eau précité permet d'améliorer le tendu du film obtenu après séchage de la peinture. L'ajout de ce liant évite au film de former de trop nombreuses rides ou de trop grosses rides qui sont inesthétiques. Ce liant permet également de durcir le film de peinture. Grâce à ce liant, le film formé par la composition de l'invention après séchage est plus résistant et notamment est résistant aux frottements humides selon la norme ISO 11998 : 2006 précitée. Selon un mode de réalisation particulier, lesdites particules et en particulier les microsphères polymériques quand ladite composition comporte des microsphère présentent un diamètre moyen sensiblement égal ou supérieur à 20µm et sensiblement égal ou inférieur à 55µm et notamment sensiblement égal ou supérieur à 30µm et sensiblement égal ou inférieur à 50µm.

Le diamètre moyen des particules de latex (sphériques ou non) est par exemple sensiblement égal ou supérieur à 20µm et sensiblement égal ou inférieur à 40µm. Il est par exemple, sensiblement égal à 35µm.

Dans la présente demande, le diamètre moyen correspond à la valeur médiane des tailles de particules pour laquelle 50% des particules de l'échantillon sont plus petites ou plus grandes que cette valeur médiane.

La taille des microsphères polymériques correspond à la taille des particules non expansées (c'est-à-dire sans dilation du fait du gaz qu'elles contiennent).

La méthode utilisée pour la mesure du diamètre moyen des microsphères polymériques met en œuvre la diffraction d'un rayon laser (« Low Angle Laser Light Scattering (LALLS). Les microsphères peuvent être dispersées dans de l'eau distillée ou mesurées sous forme de poudre. L'instrument de mesure utilisé est un diffractomètre Malvern Mastersizer 2000

Les diamètres moyens de particules de latex et des particules d'aluminosilicate(s) peuvent être mesurés selon toute méthode connue adaptée et en particulier par la même méthode que celle utilisée pour les particules d'aluminosilicate(s).

De telles particules sont invisibles à l'œil nu et ne gênent pas l'application de la peinture même en pulvérisation. Le rendu est ainsi parfait.

Par ailleurs, la présence des particules polymériques favorise l'accroche ce qui est appréciable lorsque la peinture de l'invention est utilisée pour former un revêtement servant de sous-couche.

La composition selon l'invention peut, en outre, quel que soit le mode de réalisation, comporter au moins un additif choisi parmi les agents rhéologiques, les agents antimousse, les biocides, les agents mouillants/dispersants, les inhibiteurs de corrosion, les correcteurs/ajusteurs de pH, les particules d'aluminosilicate(s) et les pâtes pigmentaires. Avantageusement, elle comporte au moins un agent mouillant/dispersant choisi parmi les tensioactifs anioniques, cationiques ou non ioniques. L'agent mouillant peut être le polyacrylate d'ammonium éventuellement en mélange avec un tensio-actif anionique. Le % massique d'agent(s) mouillant(s)/dispersant est avantageusement égal ou supérieur à 1,5, notamment sensiblement égal à 2 ou 2.100. Ce % massique permet d'éviter la séparation de phase de la composition de l'invention ; les microsphères notamment qui ont une densité inférieure à 1 ont tendance à flotter à la surface de la peinture.

En tant qu'agent rhéologique, on peut citer à titre d'exemple, les phyllosilicates activés, les polymères d'oxyde d'éthylène modifiés par de l'uréthane, les polyuréthanes hydrosolubles non ioniques, la cellulose, l'hydroxyéthylcellulose, les agents thixotropes, l'huile de ricin et les copolymères acrylique en émulsion dans de l'eau.

La composition peut également comporter au moins un autre solvant choisi parmi les esters, les diesters, le mono propylène glycol, les éthers de glycol et leurs mélanges. Par exemple, la composition de l'invention contient du mono propylène glycol et un mélange de diesters en plus de l'eau en tant que solvant.

Pour les compositions de peinture permettant d'obtenir un revêtement de finition mat et primaire, la composition de l'invention peut également comprendre des particules d'aluminosilicate(s) qui confèrent moins de brillant au revêtement final, lequel est obtenu après séchage de la peinture appliquée. Ces particules ont avantageusement une densité inférieure à 1 et un pourcentage de silice inférieur à 0,1% en masse. Elles permettent d'accroître la blancheur de la peinture et peuvent remplacer également le pigment, notamment le dioxyde de titane. Elles ont un diamètre moyen de 23,5-26,5 µm (bornes de l'intervalle comprises) et une densité supérieure ou égale à 195g/L et inférieure ou égale à 245g/L.

### DEFINITIONS

On définit le brillant d'une surface ou d'un revêtement comme étant le % de lumière réfléchie selon un angle fixé par convention. Le brillant selon l'invention se mesure avec un brillance mètre (ou glossmètre) conventionnel.

Dans la présente demande, la finition mate (encore dénommée « brillant mat ») correspond à un film obtenu après séchage de la peinture ayant un brillant inférieur à 1,5 avec un angle de lumière incidente de 60°.

Dans la présente demande, la finition velours (encore dénommée « brillant velours » ou finition veloutée) correspond à un film obtenu après séchage de la peinture ayant un brillant supérieur à 3 avec un angle de lumière incidente de 60°.

### FIGURES

La [Fig. 1] représente le tendu obtenu avec chacune des trois compositions ci-dessous mais sans le liant de type alkyde.
La [Fig. 2] représente le tendu obtenu avec chacune des trois compositions ci-dessous.

### EXEMPLES

Trois compositions de peinture selon l'invention sont décrites ci-dessous. Les particules polymériques sont choisies parmi les gamme EXPANCEL® précitée.

### composition 1

La composition 1 peut être appliquée à la brosse, au rouleau ou par pulvérisation. Elle est destinée à être utilisée en application murale ou sur les plafonds en intérieur. On obtient sur un mur une finition velours (brillant mesuré avec un brillancemètre (micro-TRI- gloss commercialisé par la société Byk-Gardner)). Elle présente une densité de 0,85-+0,03.

**Tableau 1**

| **fonction** | **nature chimique/nom commercial** | **% massique** |
|---|---|---|
| solvant | eau | 17,970 |
| agent rhéologique | Phyllosilicate activé | 0,500 |
| agent rhéologique | copolymère d'oxyde d'éthylène et d'uréthane rendu hydrophobe | 0,300 |
| agent rhéologique | polyuréthane hydrosoluble non ionique | 1,200 |
| mouillant / dispersant | polyacrylate d'ammonium | 1,000 |
| mouillant/dispersant | Surfactant anionique | 1,000 |
| agent rhéologique | Hydroxyéthylcellulose | 0,100 |
| biocide | chlorométhyl-, méthyl- and benz-isothiazolinones | 0,130 |
| agent antimousse | émulsion d'un copolymère poly(éther siloxane) | 0,400 |
| agent anti rouille instantanée | préparation aqueuse à base de sels d'acides organiques | 0,200 |
| ajusteur de pH | pyrophosphate de tétra potassium | 0,400 |
| Charge opacifiante | Particules de latex creuses | 12,000 |
| Charge (agent matant) | Microsphères polymériques | 9,300 |
| Liant | Liant alkyde uréthane | 3,000 |
| solvant | Mono propylène glycol | 6,000 |
| solvant | mélange de di ester | 0,500 |
| pigment | dioxyde de titane | 20,000 |
| liant | Dispersion styrène acrylate | 26,000 |
| **TOTAL** | | 100,000 |

### composition 2

La composition 2 peut être appliquée à la brosse, au rouleau ou par pulvérisation. Elle est destinée à être utilisée en application murale ou sur les plafonds en intérieur. On obtient sur un mur une finition mate telle que précitée dans les définitions (brillant mesuré avec le même brillancemètre que précité. Elle présente une densité de 0,85 -+ 0,03.

**Tableau 2**

| **fonction** | **Nature chimique/nom commercial** | % **massique** |
|---|---|---|
| solvant | eau | 20,680 |
| agent rhéologique | Phyllosilicate activé | 0,500 |
| agent rhéologique | copolymère d'oxyde d'éthylène et d'uréthane rendu hydrophobe | 0,500 |
| agent rhéologique | polyuréthane hydrosoluble non ionique | 1,700 |
| mouillant/dispersant | polyacrylate d'ammonium | 1,000 |
| mouillant/dispersant | Surfactant ionique | 1,000 |
| agent rhéologique | Hydroxyéthylcellulose | 0,200 |
| biocide | chlorométhyl-, méthyl- and benz-isothiazolinones | 0,120 |
| agent antimousse | émulsion d'un copolymère poly(éthersiloxane) | 0,400 |
| agent anti rouille instantanée | préparation aqueuse à base de sels d'acides organiques | 0,200 |
| ajusteur de pH | pyrophosphate de tétra potassium | 0,400 |
| Charge (Agent opacifiant) | Particules de latex creuses | 10,000 |
| charge | Particules d'aluminosilicate(s) | 2,500 |
| Charge (agent matant) | Microsphères polymériques | 8,300 |
| Liant | Résine alkyde uréthane | 3,000 |
| solvant | Mono propylène glycol | 6,000 |
| solvant | mélange de di esters | 0,500 |
| pigment | dioxyde de titane | 17,000 |
| Liant | Dispersion styrène acrylate | 26,000 |
| **TOTAL** | | 100,000 |

### composition 3

La composition 3 peut être appliquée à la brosse, au rouleau ou par pulvérisation. Elle est destinée à être utilisée en application murale ou sur les plafonds en intérieur. On obtient sur un mur une finition primaire (utilisation en sous couche) (brillant <1,5 mesuré avec le même brillancemètre que précité en référence à l'exemple 1 et avec un angle de lumière incidente de 60°). Elle présente une densité de 0,85 -+0,03.

Le tableau 3 ci-dessous indique un exemple de formulation de peinture primaire, destinée à être recouverte.

**Tableau 3**

| **Fonction** | **Nature chimique** | % **massique** |
|---|---|---|
| solvant | eau | 22,080 |
| agent rhéologique | Phyllosilicate activé | 0,500 |
| agent rhéologique | copolymère d'oxyde d'éthylène et d'uréthane rendu hydrophobe | 0,500 |
| agent rhéologique | polyuréthane hydrosoluble non ionique | 1,000 |
| mouillant / dispersant | polyacrylate d'ammonium | 1,100 |
| mouillant / dispersant | Surfactant anionique | 1,000 |
| agent rhéologique | hydroxyéthylcellulose | 0,200 |
| biocide | chlorométhyl-, méthyl- and benz-isothiazolinones | 0,120 |
| agent antimousse | émulsion d' un copolymère poly(éther siloxane) | 0,400 |
| agent anti rouille instantanée | préparation aqueuse à base de sels d'acides organiques | 0,200 |
| ajusteur de pH | pyrophosphate de tétra potassium | 0,400 |
| Charge (agent opacifiant) | Particules de latex creuses | 10,000 |
| charge | Particules d'aluminosilicate(s) | 1,000 |
| Charge (agent matant) | Microsphères polymériques | 7,500 |
| charge | carbonate de calcium | 9,000 |
| liant | Résine alkyde uréthane | 3,000 |
| solvant | mono propylène glycol | 5,000 |
| solvant | mélange de di-esters | 1,000 |
| pigment | dioxyde de titane | 11,000 |
| liant | Dispersion styrène acrylate | 25,000 |
| **TOTAL** | | 100,000 |

Le phyllosilicate activé peut être, par exemple le produit commercialisé sous l'appellation Optigel WX par la société BYK.

Le copolymère d'oxyde d'éthylène et d'uréthane rendu hydrophobe peut être par exemple le produit commercialisé sous l'appellation Acrysol RM845 par la société DOW ou le produit commercialisé sous l'appellation Coapur 830W.

Le polyuréthane hydrosoluble non ionique peut être le produit commercialisé sous l'appellation Coapur 3025 par la société Coatex.

L'agent anti rouille instantanée (ou agent anti corrosion) peut être choisi parmi les produits suivants : Ascotran H10 (Ascotec), Additex AFR (Scott Bader).

Les particules de latex creuses peuvent être par exemple, les particules commercialisée sous les appellations suivantes : ropaque ultra E (Dow), celocor 2801 (Arkema), orgawhite 2000 (Organik kimya).

Le liant de type dispersion styrène acrylate peut être choisi parmi les produits suivants : encor 2421 (Arkema), ucar latex 420G (Dow), acronal S790 (BASF).

Le liant alkyde uréthane, notamment le liant alkyde uréthane modifié en émulsion dans de l'eau, peut être choisi parmi les produits suivants : Worlee E150W commercialisé par la société Worlee, neopac PU 580 (DSM).

Les particules d'aluminosilicate(s) peuvent être choisies parmi les produits commercialisés sous les appellations optimat 2550 (Imerys), Zeolex 98 (Zeolex).

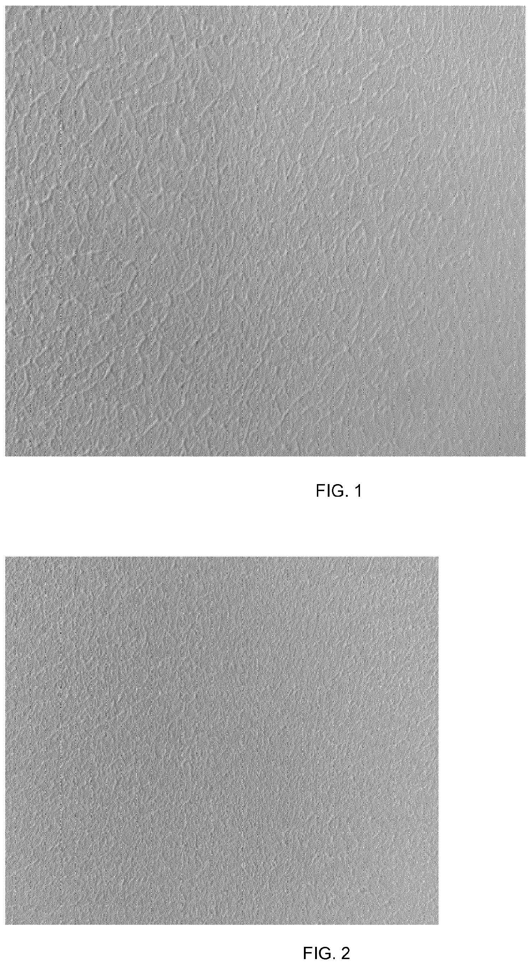

En référence aux figures 1 et 2, constate que l'absence de liant de type alkyde et notamment de type alkyde uréthane provoque l'apparitions de grosses rides à la surface du mur. Lorsque ce liant est ajouté, les rides sont moins nombreuses et moins grosses et moins longues. L'ajout du liant précité permet d'obtenir un revêtement plus lisse.

## Revendications

1. Composition de peinture contenant, en tant que solvant majoritaire, de l'eau et au moins un pigment, **caractérisée en ce qu'**elle contient, en outre, des particules polymériques creuses, en particulier des particules polymériques creuses choisies parmi les particules de latex creuses, les microsphères polymériques creuses et les mélanges de ces deux types de particules et **en ce qu'**elle présente une densité inférieure à 1 et en particulier inférieure ou égale à 0,90 et plus particulièrement égale à 0,85 ±0,03.

2. Composition selon la revendication 1, **caractérisée en ce qu'**elle contient un % massique desdites particules polymériques creuses sensiblement égal ou supérieur à 15% et sensiblement égal ou inférieur à 23% et en particulier sensiblement égal ou supérieur à 17,5% ou sensiblement égal ou supérieur à 18,3 ou sensiblement égal ou supérieur à 21,3%.

3. Composition selon la revendication 1 ou 2, **caractérisée en ce qu'**elle contient un % massique desdites microsphères polymériques sensiblement égal ou supérieur à 6% et sensiblement égal ou inférieur à 11% et en particulier sensiblement égal ou supérieur à 7,5%, plus particulièrement sensiblement égal ou supérieur à 8,3% et plus particulièrement encore sensiblement égal ou supérieur à 9,3% et/ou un % massique desdites particules de latex creuses sensiblement égal ou supérieur à 10 % et sensiblement égal ou inférieur à 14% et en particulier sensiblement égal ou supérieur à 12%.

4. Composition selon l'une quelconque des revendications précédentes, **caractérisée en ce que** ledit pigment est choisi parmi les pérylènes, les quinacridones, les phtalocyanines, les pigments azoïques, et les sulfures et les oxydes métalliques de fer, chrome, cobalt et titane.

5. Composition de peinture selon l'une quelconque des revendications 1 à 4, **caractérisée en ce que** lesdites microsphères polymériques creuses comportent une coque comprenant ou constituée d'un copolymère d'acrylonitrile de chlorure de vinylidène et d'acrylate de méthyle, ladite coque renfermant éventuellement un gaz.

6. Composition selon l'une quelconque des revendications précédentes, **caractérisée en ce que** le rapport massique particules polymériques/pigment(s) est sensiblement égal ou supérieur à 1 et sensiblement égal ou inférieur à 1,9 et en particulier sensiblement égal ou supérieur à 1,08 ou sensiblement égal ou supérieur à 1,59 ou plus particulièrement sensiblement égal ou supérieur à 1,65 et **en ce que** lorsque ladite composition comporte des microsphères le % massique microsphères polymériques/pigment(s) est sensiblement égal ou supérieur à 0,300 et sensiblement égal ou inférieur à 0,750 et en particulier sensiblement égal ou supérieur à 0,465 ou sensiblement égal ou supérieur à 0,488 ou sensiblement égal ou supérieur à 0,682

7. Composition selon l'une quelconque des revendications précédentes, **caractérisée en ce que** le rapport massique particules polymériques/eau est sensiblement égal ou supérieur à 0,50 et sensiblement égal ou inférieur à 1,3 et en particulier sensiblement égal ou supérieur à 0,79 ou sensiblement égal ou supérieur à 0.88 et plus particulièrement sensiblement égal ou supérieur à 0,79 et **en ce que**, lorsque ladite composition comporte des microsphères polymériques, le % massique microsphères polymériques/eau est sensiblement égal ou supérieur à 0,30 et sensiblement inférieur à 0,6 et en particulier sensiblement égal ou supérieur à 0,339 plus particulièrement sensiblement égal ou supérieur à 0,401 et encore plus particulièrement sensiblement égal ou supérieur à 0,517.

8. Composition selon l'une quelconque des revendications précédentes, **caractérisée en ce qu'**elle comporte au moins un liant de type alkyde et plus particulièrement un liant du type alkyde uréthane en émulsion dans de l'eau et **en ce que** le % massique dudit liant(s) de type alkyde est sensiblement supérieur ou égal à 2,5 et sensiblement égal ou inférieur à 4 et en particulier sensiblement égal à 3.

9. Composition de peinture selon l'une quelconque des revendications précédentes, **caractérisée en ce que** lesdites particules polymériques et en particulier lesdites microsphères polymériques, quand ladite composition comporte des microsphères polymériques, présentent un diamètre moyen sensiblement égal ou supérieur à 20µm et sensiblement égal ou inférieur à 55µm et notamment sensiblement égal ou supérieur à 30µm et sensiblement égal ou inférieur à 50µm.

10. Composition selon l'une quelconque des revendications précédentes, **caractérisée en ce qu'**elle comporte en outre, au moins un additif choisi parmi les agents rhéologiques, les agents antimousse, les biocides, les agents mouillants/dispersants, les inhibiteurs de corrosion, les correcteurs de pH, les particules d'aluminosilicate(s) et les pâtes pigmentaires.

## Patentansprüche

1. Farbzusammensetzung, enthaltend Wasser als Hauptlösungsmittel und mindestens ein Pigment, **dadurch gekennzeichnet, dass** sie weiterhin hohle Polymerteilchen enthalten, insbesondere hohle Polymerteilchen, die aus hohlen Latexteilchen, hohlen Polymermikrokügelchen und Gemischen dieser zwei Typen von Teilchen ausgewählt sind, und dass sie eine Dichte aufweist, die kleiner als 1 und insbesondere kleiner als oder gleich 0,90 und ganz besonders gleich 0,85 ± 0,03 ist.

2. Zusammensetzung nach Anspruch 1, **dadurch gekennzeichnet, dass** sie einen Massenprozentanteil der hohlen Polymerteilchen enthält, der im Wesentlichen gleich oder höher als 15 % und im Wesentlichen gleich oder kleiner als 23 % und insbesondere im Wesentlichen gleich oder höher als 17,5 % oder im Wesentlichen gleich oder höher als 18,3 oder im Wesentlichen gleich oder höher als 21,3 % ist.

3. Zusammensetzung nach Anspruch 1 oder 2, **dadurch gekennzeichnet, dass** sie einen Massenprozentanteil der hohlen Polymermikrokügelchen enthält, der im Wesentlichen gleich oder höher als 6 % und im Wesentlichen gleich oder kleiner als 11 % und insbesondere im Wesentlichen gleich oder höher als 7,5 %, ganz besonders im Wesentlichen gleich oder höher als 8,3 oder im Wesentlichen gleich oder höher als 9,3 % ist, und/oder einen Massenprozentanteil der hohlen Latexteilchen enthält, der im Wesentlichen gleich oder höher als 10 % und im Wesentlichen gleich oder kleiner als 14 % und insbesondere im Wesentlichen gleich oder höher als 12 % ist.

4. Zusammensetzung nach einem der vorhergehenden Ansprüche, **dadurch gekennzeichnet, dass** das Pigment aus Perylenen, Chinacridonen, Phthalocyaninen, Azopigmenten und Sulfiden und Metalloxiden von Eisen, Chrom, Kobalt und Titan ausgewählt ist.

5. Farbzusammensetzung nach einem der Ansprüche 1 bis 4, **dadurch gekennzeichnet, dass** die hohlen Polymermikrokügelchen eine Schale umfassen, die ein Copolymer von Vinylidenchlorid-Acrylnitril und Methylacrylat umfasst oder daraus besteht, wobei die Schale gegebenenfalls ein Gas umschließt.

6. Zusammensetzung nach einem der vorhergehenden Ansprüche, **dadurch gekennzeichnet, dass** das Massenverhältnis von Polymerteilchen/Pigment(en) im Wesentlichen gleich oder höher als 1 und im Wesentlichen gleich oder kleiner als 1,9 und insbesondere im Wesentlichen gleich oder höher als 1,08 oder im Wesentlichen gleich oder höher als 1,59 oder ganz besonders im Wesentlichen gleich oder höher als 1,65 ist und dass, wenn die Zusammensetzung Mikrokügelchen umfasst, der Massenprozentanteil an Polymermikrokügelchen/Pigment(en) im Wesentlichen gleich oder höher als 0,300 und im Wesentlichen gleich oder kleiner als 0,750 und insbesondere im Wesentlichen gleich oder höher als 0,465 oder im Wesentlichen gleich oder höher als 0,488 oder ganz besonders im Wesentlichen gleich oder höher als 0,682 ist.

7. Zusammensetzung nach einem der vorhergehenden Ansprüche, **dadurch gekennzeichnet, dass** das Massenverhältnis von Polymerteilchen/Wasser im Wesentlichen gleich oder höher als 0,50 und im Wesentlichen gleich oder kleiner als 1,3 und insbesondere im Wesentlichen gleich oder höher als 0,79 oder im Wesentlichen gleich oder höher als 0,88 oder ganz besonders im Wesentlichen gleich oder höher als 0,79 ist und dass, wenn die Zusammensetzung Polymermikrokügelchen umfasst, der Massenprozentanteil an Polymermikrokügelchen/Wasser im Wesentlichen gleich oder höher als 0,30 und im Wesentlichen kleiner als 0,6 und insbesondere im Wesentlichen gleich oder höher als 0,339, ganz besonders im Wesentlichen gleich oder höher als 0,401 oder noch mehr besonders im Wesentlichen gleich oder höher als 0,517 ist.

8. Zusammensetzung nach einem der vorhergehenden Ansprüche, **dadurch gekennzeichnet, dass** sie mindestens ein Bindemittel vom Alkyd-Typ und ganz besonders ein Bindemittel vom Alkydurethan-Typ in Emulsion in dem Wasser umfasst und dass der Massenprozentanteil des(der) Bindemittel(s) vom Alkyd-Typ im Wesentlichen höher als oder gleich 2,5 und im Wesentlichen gleich oder kleiner als 4 und insbesondere im Wesentlichen gleich 3 ist.

9. Farbzusammensetzung nach einem der vorhergehenden Ansprüche, **dadurch gekennzeichnet, dass** die Polymerteilchen und insbesondere die Polymermikrokügelchen, wenn die Zusammensetzung Polymermikrokügelchen umfasst, einen mittleren Durchmesser aufweisen, der im Wesentlichen gleich oder höher als 20 µm und im Wesentlichen gleich oder kleiner als 55 µm und insbesondere im Wesentlichen gleich oder höher als 30 µm und im Wesentlichen gleich oder kleiner als 50 µm ist.

10. Zusammensetzung nach einem der vorhergehenden Ansprüche, **dadurch gekennzeichnet, dass** sie weiterhin mindestens ein Additiv umfasst, das aus Rheologiemitteln, Entschäumern, Bioziden, Benetzungs-/Dispersionsmitteln, Korrosionsschutzmitteln, Mitteln zur Korrektur des pH-Werts, Teilchen von Alumosilicat(en) und Pigmentpasten ausgewählt ist.

## Claims

1. Paint composition containing, as the main solvent, water and at least one pigment, **characterised in that** it further contains hollow polymer particles, in particular hollow polymer particles selected from hollow latex particles, hollow polymer microspheres and mixtures of these two types of particle, and **in that** it has a density of less than 1 and in particular less than or equal to 0.90 and more particularly equal to 0.85 ± 0.03.

2. Composition according to claim 1, **characterised in that** it contains a % by mass of said hollow polymer particles substantially equal to or greater than 15% and substantially equal to or less than 23% and in particular substantially equal to or greater than 17.5% or substantially equal to or greater than 18.3 or substantially equal to or greater than 21.3%.

3. Composition according to claim 1 or 2, **characterised in that** it contains a % by mass of said polymer microspheres substantially equal to or greater than 6% and substantially equal to or less than 11% and in particular substantially equal to or greater than 7.5%, more particularly substantially equal to or greater than 8.3% and still more particularly substantially equal to or greater than 9.3% and/or a % by mass of said hollow latex particles substantially equal to or greater than 10% and substantially equal to or less than 14% and in particular substantially equal to or greater than 12%.

4. Composition according to any one of the preceding claims, **characterised in that** said pigment is selected from perylenes, quinacridones, phthalocyanines, azoic pigments, and sulfides and the metal oxides of iron, chromium, cobalt and titanium.

5. Paint composition according to any one of claims 1 to 4, **characterised in that** said hollow polymer microspheres include a shell comprising or consisting of a copolymer of vinylidine chloride acrylonitrile and methyl acrylate, said shell optionally enclosing a gas.

6. Composition according to any one of the preceding claims, **characterised in that** the ratio by mass of polymer particles/pigment(s) is substantially equal to or greater than 1 and substantially equal to or less than 1.9 and in particular substantially equal to or greater than 1.08 or substantially equal to or greater than 1.59 or more particularly substantially equal to or greater than 1.65, and **in that**, when said composition includes microspheres, the % by mass of polymer microspheres/pigment(s) is substantially equal to or greater than 0.300 and substantially equal to or less than 0.750 and in particular substantially equal to or greater than 0.465 or substantially equal to or greater than 0.488 or substantially equal to or greater than 0.682.

7. Composition according to any one of the preceding claims, **characterised in that** the ratio by mass of polymer particles/water is substantially equal to or greater than 0.50 and substantially equal to or less than 1.3 and in particular substantially equal to or greater than 0.79 or substantially equal to or greater than 0.88 and more particularly substantially equal to or greater than 0.79, and **in that**, when said composition includes polymer microspheres, the % by mass of polymer microspheres/water is substantially equal to or greater than 0.30 and substantially less than 0.6 and in particular substantially equal to or greater than 0.339 and more particularly substantially equal to or greater than 0.401 and even more particularly substantially equal to or greater than 0.517.

8. Composition according to any one of the preceding claims, **characterised in that** it includes at least one binder of the alkyd type and more particularly a binder of the urethane alkyd type in emulsion in water, and **in that** the % by mass of said binder (s) of the alkyd type is substantially greater than or equal to 2.5 and substantially equal to or less than 4 and in particular substantially equal to 3.

9. Paint composition according to any one of the preceding claims, **characterised in that** said polymer particles and in particular said polymer microspheres, when said composition includes polymer microspheres, have a mean diameter substantially equal to or greater than 20 µm and substantially equal to or less than 55 µm and in particular substantially equal to or greater than 30 µm and substantially equal to or less than 50 µm.

10. Composition according to any one of the preceding claims, **characterised in that** it further includes, at least an additive chosen from rheological agents, antifoaming agents, biocides, wetting agents/dispersants, corrosion inhibiters, pH correctors, aluminosilicate particles and pigment pastes.
